Europäisches Patentamt

**(19)** European Patent Office

Office européen des brevets

**(11)** Numéro de publication : **0 311 498 B1**

**(12)** FASCICULE DE BREVET EUROPEEN

**(45)** Date de publication du fascicule du brevet :
09.10.91 Bulletin 91/41

**(51)** Int. Cl.$^5$ : **F16B 37/04,** F16B 43/00

**(21)** Numéro de dépôt : 88402496.9

**(22)** Date de dépôt : 03.10.88

**(54)** Perfectionnements aux systèmes de fixation comportant des écrous emprisonnés dans des cages.

**(30)** Priorité : 05.10.87 FR 8713722

**(43)** Date de publication de la demande :
12.04.89 Bulletin 89/15

**(45)** Mention de la délivrance du brevet :
09.10.91 Bulletin 91/41

**(84)** Etats contractants désignés :
BE DE ES GB IT NL

**(56)** Documents cités :
EP-A- 0 053 543
EP-A- 0 066 031
FR-A- 1 403 611
FR-A- 1 595 233
US-A- 4 230 326

**(73)** Titulaire : COMPAGNIE DE MATERIEL ET
D'EQUIPEMENTS TECHNIQUES C.O.M.E.T.
27, Avenue Etienne Audibert
F-60304 Senlis Cedex (FR)

**(72)** Inventeur : Moryl, Richard
10, Avenue M. Eugénie
F-95600 Eaubonne (FR)
Inventeur : Bouery, Roger
26 Rue Fessart
F-75019 Paris (FR)

**(74)** Mandataire : Behaghel, Pierre et al
CABINET PLASSERAUD 84 rue d'Amsterdam
F-75009 Paris (FR)

## Description

L'invention est relative aux systèmes de fixation écrous prisonniers-cages destinés à être posés sur une tôle à partir de l'une des faces de cette tôle en vue de recevoir des boulons se présentant sur cette même face, en raison de l'inaccessibilité de l'autre face due par exemple au fait que la tôle fait partie d'un caisson fermé au moins partiellement, comme il arrive fréquemment pour les carrosseries de véhicule.

Elle vise plus particulièrement, parmi lesdits systèmes de fixation, ceux comportant :

— un écrou à oreilles propre à coopérer avec un trou allongé percé dans la tôle à l'endroit désiré,

— et une cage de maintien et de guidage propre à être également montée dans ce trou, cage constituée par une douille en matière plastique moulée fendue longitudinalement par des fenêtres traversées jointement par les oreilles de l'écrou, ladite douille étant raccordée à une collerette extérieure à l'une de ses extrémités, et des bossages extérieurs venus de moulage avec cette douille étant prévus pour coopérer avec les extrémités longitudinales du trou aux fins de verrouillage angulaire de la douille après introduction axiale de celle-ci garnie de l'écrou dans ce trou, puis déplacement angulaire de 90° de la douille garnie ainsi introduite.

Les systèmes de fixation du genre en question, qui servent à fixer sur la tôle considérée au moins une pièce disposée entre la collerette de la cage et la tête du boulon, donnent généralement satisfaction (voir FR-A 1595233).

Mais, pour certaines applications, ils présentent des inconvénients.

Il en est ainsi lorsqu'ils sont utilisés pour monter un accessoire sur une portion de carrosserie de véhicule avant dépôt des différentes couches de peinture et de protection sur ladite portion de carrosserie.

En effet, les dépôts en question, qui peuvent être effectués à chaud et qui sont généralement suivis d'un séchage au four, entraînent un certain nombre de conséquences et en particulier les suivantes :

— la collerette en matière plastique est écrasée, lors du visage qui assure le montage désiré, entre la tôle et la pièce fixée sur cette tôle : ces deux pièces ne sont alors séparées l'une de l'autre, à proximité de ladite collerette, que par un intervalle de très faible épaisseur, intervalle difficilement accessible aux peintures souvent relativement grasses,

— la fin du vissage ci-dessus, étant limitée par un degré d'écrasement raisonnable de la collerette, n'est pas déterminée avec exactitude,

— les chauffages occasionnés par les opérations de peinture et/ou de séchage risquent de détériorer la collerette écrasée au point de modifier le couple de serrage correspondant à la fin du vissage ci-dessus et de provoquer éventuellement le desserrage du système.

De plus, la liberté de déplacement axial de l'écrou dans la cage jusqu'à son serrage par vissage du boulon peut constituer un inconvénient dans certaines applications, en particulier lorsque le vissage doit être effectué vers le haut et/ou lorsque l'écrou est relativement plat et facilement introduit dans la cage par traversée de ses fenêtres.

L'invention a pour but, entre autres, de remédier à ces différents inconvénients.

A cet effet, les systèmes de fixation selon l'invention sont essentiellement caractérisés en ce qu'ils comprennent, coiffant jointement leur collerette extérieure, un capuchon métallique plat perforé de façon à livrer passage aux boulons et présentant des rebords rabattus axialement dont la hauteur axiale est égale ou légèrement inférieure à l'épaisseur de la collerette, l'un au moins de ces rebords étant rabattu à un peu plus de 90° de façon à emprisonner la collerette.

Dans des modes de réalisation préférés, on a recours en outre à l'une et/ou à l'autre des dispositions suivantes :

— la collerette est rectangulaire, les rebords rabattus sont au nombre de quatre, longeant chacun un côté du rectangle, et deux de ces quatre rebords, opposés deux à deux, sont rabattus à plus de 90° de façon à emprisonner la collerette,

— la cage comprend d'une part des pattes extérieures à rampes obliques propres à prendre appui axialement contre la tôle perforée à la fin de la mise en place de la cage sur cette tôle et, d'autre part, des crans intérieurs à rampes obliques propres à maintenir provisoirement l'écrou dans le fond, de la cage, le plus éloigné de la collerette après sa mise en place dans ce fond, la résistance opposée par ces crans aux déplacements axiaux de l'écrou dans la cage étant très inférieure à la résistance opposée par les pattes extérieures au décrochage de la cage par rapport à la tôle.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

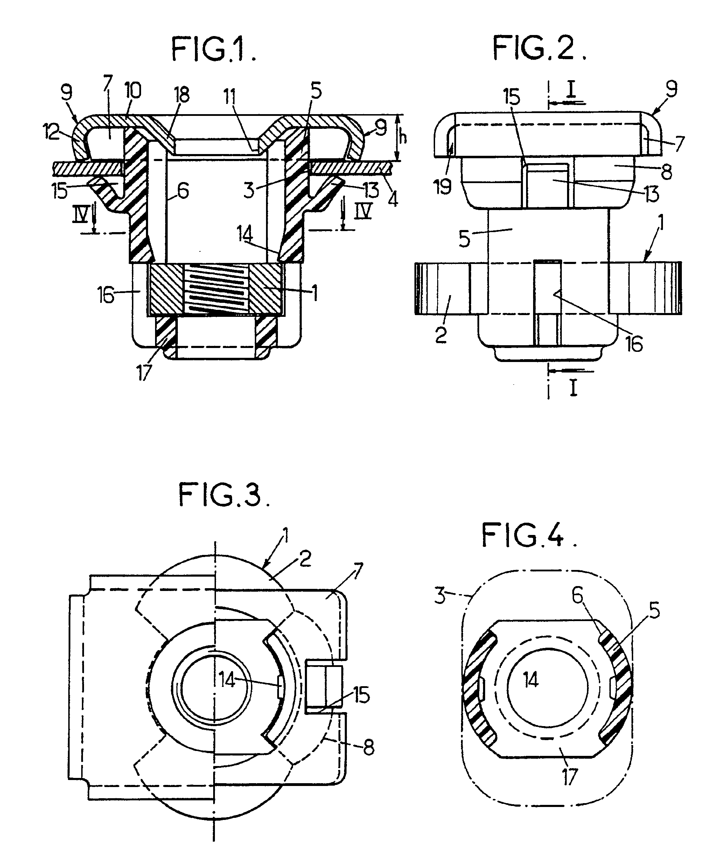

La figure 1, de ce dessin, montre en coupe axiale selon I-I, figure 2 un système de fixation établi conformément à l'invention monté sur une tôle perforée, avant apposition de la pièce à fixer sur cette tôle et présentation du boulon correspondant.

Les figures 2, 3 et 4 montrent le même système respectivement en vue latérale, en vue de dessus, le capuchon de couverture étant ôté dans la moitié droite de cette dernière vue, et en coupe transversale selon IV-IV, figure 1.

D'une façon connue en soi, le système de fixation comporte :

— d'une part un écrou 1 comportant deux oreilles 2 et propre à traverser axialement un trou allongé 3 percé dans la partie d'une tôle 4 sur laquelle on désire assurer la fixation,

— d'autre part une cage constituée par une douille 5 en matière plastique moulable percée de deux fenêtres longitudinales 6 diamétralement opposées propres à être traversées jointivement par les oreilles 2 de l'écrou 1.

La douille se termine à l'une de ses extrémités axiales par une collerette extérieure continue 7 suffisamment étendue pour recouvrir entièrement le bord du trou 3.

Des bossages extérieures 8 sont venus de moulage avec la douille, à proximité immédiate de la collerette 7, en des positions angulairement décalées de 90° par rapport aux fenêtres 6, bossages dont le contour est sensiblement complémentaire de celui du trou 3.

Le fonctionnement d'un tel système est le suivant.

Après mise en place de l'écrou 1 dans la cage 5 par introduction transversale de cet écrou à travers les fenêtres 6, on introduit axialement l'ensemble dans le trou 3 évidé dans la tôle 4 en orientant correctement les oreilles 2 dudit écrou et, si besoin, c'est-à-dire si le trou est un peu plus petit que l'écrou, un inclinant ledit ensemble en conséquence.

Puis, après butée axiale des bossages 8 contre la tôle 4, on fait tourner l'ensemble de 90° autour de son axe, ce qui présente lesdits bossages 8 axialement en regard des extrémités longitudinales du trou 3.

On enfonce alors axialement ces bossages dans ces extrémités et le système est en place.

Pour fixer une pièce sur la tôle 4, il suffit alors :

— d'appliquer extérieurement cette pièce contre la collerette 7 de façon à placer un évidement de ladite pièce - - constitué généralement par un trou circulaire - - coaxialement au système,

— puis d'introduire axialement un boulon successivement dans ledit évidement, puis dans la cage 5 et dans l'écrou 1,

— et enfin de visser le boulon dans l'écrou, ce qui rapproche axialement cet écrou de la tôle 4 jusqu'à butée axiale de ses oreilles 2 contre cette tôle.

Le système de fixation décrit ci-dessus est perfectionné selon l'invention par un capuchon 9 qui coiffe jointivement la collerette 7.

Ce capuchon présente d'une part un fond plat 10 perforé en 11 de façon à livrer passage aux boulons de fixation, et d'autre part des rebords 12 rabattus axialement.

La hauteur axiale $\underline{h}$ de ces rebords 12 est égale ou de préférence légèrement inférieure à l'épaisseur de la collerette 7.

L'un au moins de ces rebords 12 est rabattu a plus de 90° de façon à emprisonner la collerette 7.

Dans le mode de réalisation illustré, la collerette 7, ainsi que le capuchon 9 qui la coiffe, présentent tous deux une forme rectangulaire et ce sont les rebords 12 correspondant aux petits côtés du rectangle qui sont rabattus à plus de 90°.

La présence de ce capuchon 9 ne modifie pratiquement pas les processus de mise en place du système de fixation et de mise en oeuvre de la fixation elle-même.

Mais elle présente plusieurs avantages, et en particulier les suivantes :

— le capuchon maintient obligatoirement entre la tôle 4 et la pièce fixée sur cette tôle un intervalle d'épaisseur $\underline{h}$ relativement important suffisant pour livrer accès aux peintures même épaisses,

— ledit capuchon protège la collerette 7 en évitant son écrasement excessif lors des vissages, les fins de ces vissages étant assurés d'une manière exactement définie par une suite de contacts exclusivement métal-métal,

— il n'y a plus de risque que la tôle 4 soit déformée en creux à proximité du bord du trou 3 du fait de la pression exercée sur ce bord par la tête de la vis qui coopère avec l'écrou 1 : en effet, cette pression de vissage n'est plus ici appliquée sur la tôle 4 au niveau du bord du trou 3, mais au niveau des tranches des rebords 12 du capuchon 9,

— le vissage qui assure la fixation se termine par une application axiale très ferme des tranches des rebords 12 du capuchon 9 contre la tôle 4, ce qui renforce la solidité de la fixation du fait des contacts très intimes qui sont ainsi établis localement.

Le capuchon 9 peut être réalisé en tout métal ou alliage désirable.

Il est par exemple constitué par une plaquette en acier revêtue par une couche d'aluminium-zinc : avec un tel revêtement, le contact local intime ci-dessus indiqué s'accompagne d'une réaction électro-chimique entre les plages mutuellement appliquées, ce qui assure une auto-protection de la zone de contact.

L'épaisseur de la tôle constitutive du capuchon est notamment de l'ordre du mm, étant généralement comprise entre 0,5 et 2 mm et la hauteur $\underline{h}$ varie elle-même en fonction des dimensions générales du capuchon, étant par exemple comprise entre 2 et 4 mm.

Selon un autre perfectionnement également apporté par l'invention aux systèmes de fixation du genre indiqué ci-dessus, on fait comprendre à la cage 5 :

— d'une part des pattes extérieures 13 à rampes obliques disposées angulairement au milieu des bossages 8 et propres à prendre appui contre la face "intérieure" de la tôle 4, dès la détente transversale desdites pattes par déclic à la fin de l'introduction axiale des bossages 8 dans le trou 3, ce qui assure une ferme application axiale de la cage contre la tôle,

— d'autre part des crans intérieurs 14 à rampes obliques propres à maintenir l'écrou 1 dans le fond, de la cage, le plus éloigné de la collerette 7 après mise en place de cet écrou dans ce fond.

La résistance opposée par les pattes 13 au décrochage axial de la cage par rapport à la tôle est supérieure à la résistance opposée par les crans 14 aux déplacements axiaux de l'écrou dans la cage.

De cette mesure résultent les deux conséquences suivantes :

— l'écrou 1 demeure au fond de la cage tant que le système de fixation n'est pas utilisé, ce qui peut présenter de l'intérêt dans certaines situations, en particulier lorsque le montage du système sur la tôle est effectué à l'envers, vers le haut,

— mais, lors d'un vissage destiné à assurer une fixation, l'écrou 1 est facilement débloqué du fond de la cage pour se rapprocher axialement de la tôle sans que la cage cesse pour autant d'être maintenue axialement contre cette tôle.

On voit encore sur le dessin, allégeant la cage et facilitant sa fabrication par moulage :

— des lumières longitudinales 15 évidées en regard des pattes 13 dans les bossages 8 et la collerette 7,

— et des lumières longitudinales 16 évidées en regard des crans 14 dans la portion, de la douille 5, la plus éloignée de la collerette 7 et dans une partie du fond 17 de cette douille, lequel est avantageusement formé par une bague percée de manière à pouvoir être traversé par les extrémités des boulons de fixation.

On voit également sur ce dessin :

— une dépression tronconique 18 formée dans la portion centrale du fond plat 10 du capuchon 9 et terminée par l'orifice 11, dépression qui permet de guider les débuts d'introduction des boulons dans le système,

— et des jours 19 formés aux quatre coins du capuchon entre les rebords 12 contigus et perpendiculaires entre eux deux à deux.

En suite de quoi, et quel que soit le mode de réalisation adopté, on dispose finalement de systèmes de fixation dont la constitution, la mise en oeuvre et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Système de fixation écrou prisonnier-cage destiné à être posé sur une tôle à partir de l'une des faces de cette tôle en vue de recevoir des boulons se présentant sur cette même face, comportant : un écrou (1) à oreilles (2) propre à coopérer avec un trou allongé (3) percé dans la tôle (4) ; et une cage de maintien et de guidage (5) propre à être également montée dans ce trou, cage constituée par une douille en matière plastique moulée fendue longitudinalement par des fenêtres (6) traversées jointivement par les oreilles de l'écrou, ladite douille étant raccordée à une collerette extérieure (7) à l'une de ses extrémités, et des bossages extérieurs (8) venus de moulage avec cette douille étant prévus pour coopérer avec les extrémités longitudinales du trou aux fins de verrouillage angulaire de la douille après introduction axiale de celle-ci garnie de l'écrou dans ce trou, puis déplacement angulaire de 90° de la douille garnie ainsi introduite, caractérisé en ce qu'il comprend, coiffant jointivement sa collerette extérieure (7), un capuchon métallique (9) plat perforé de façon à livrer passage aux boulons et présentant des rebords (12) rabattus axialement dont la hauteur axiale est égale ou légèrement inférieure à l'épaisseur de la collerette, l'un au moins de ces rebords étant rabattu à un peu plus de 90° de façon à emprisonner la collerette.

2. Système de fixation selon la revendication 1, caractérisé en ce que la collerette (7) est rectangulaire, en ce que les rebords rabattus (12) sont au nombre de quatre, longeant chacun un côté du rectangle, et en ce que deux de ces quatre rebords, opposés deux à deux, sont rabattus à plus de 90° de façon à emprisonner la collerette.

3. Système de fixation selon l'une quelconque des revendications 1 et 2, caractérisé en ce que la cage (5) comprend d'une part des pattes extérieures (13) à rampes obliques propres à prendre appui axialement contre la tôle perforée (4) à la fin de la mise en place de la cage sur cette tôle et, d'autre part, des crans (14) intérieurs à rampes obliques propres à maintenir provisoirement l'écrou (1) dans le fond, de la cage, le plus éloigné de la collerette (7) après sa mise en place dans ce fond, la résistance opposée par ces crans aux déplacements axiaux de l'écrou dans la cage étant très inférieure à la résistance opposée par les pattes extérieures au décrochage de la cage par rapport à la tôle.

## Patentansprüche

1. Befestigungssystem mit in Käfigen eingefaßten Muttern, das von einer der Oberflächen eines Bleches aus in dieses eingesetzt wird und dazu dient, Schraubbolzen von derselben Oberfläche aus aufzunehmen und das aus folgenden Teilen besteht : einer Schraubmutter (1) mit Ansätzen (2), die mit einem Langloch (3) zusammenwirken, das in das Blech (4) gebohrt ist und einem Käfig (5) zum Halten und zur Führung der Mutter, der ebenfalls in dem Loch befestigbar ist, wobei der Käfig aus einer Hülse aus geformtem plastischem Material besteht, die in Längsrichtung mit Aussparungen (6) versehen ist, durch die die Ansätze (2) der Schraubmutter dicht hindurchtreten, die Hülse an einem Ende mit einem äußeren Kragen (7) versehen ist und äußere, zusammen mit der Hülse geformte Verdickungen (8) vorgesehen sind, die mit den in Längsrichtung verlaufenden Enden des Langloches zusammenwirken, um die Hülse winklig zu verriegeln, nachdem sie zusammen mit der Schraubmutter axial in das Loch eingeführt und dann um einen Winkel von 90° verdreht wurde, dadurch gekennzeichnet, daß das Befestigungssystem eine den äußeren Kragen (7) dicht überdeckende, flache metallische Kappe (9) enthält, die mit einer Bohrung versehen ist, um einen Durchgang für Schraubbolzen freizulassen und in axialer Richtung umgebogene Ränder (12) aufweist, deren axiale Höhe gleich oder etwas kleiner ist als die Stärke des Kragens, wobei wenigstens einer der Ränder um etwas mehr als 90° umgebogen ist, um den Kragen zu umschließen.

2. Befestigungssystem nach Anspruch 1, dadurch gekennzeichnet, daß der Kragen (7) rechteckig ist, daß vier umgebogene Ränder (12) vorhanden sind, von denen sich jeder längs einer Seite des Rechteckes erstreckt, und daß zwei sich gegenüberliegende Ränder um mehr als 90° umgebogen sind, um den Kragen zu umschließen.

3. Befestigungssystem nach einem der Ansprüche 1 und 2, dadurch gekennzeichnet, daß der Käfig (5) einerseits äußere Laschen (13) mit geneigt verlaufenden Abschnitten, die sich in axialer Richtung an dem mit der Bohrung versehenen Blech (4) abstützen, am Ende des Anlegens des Käfigs an diesem Blech, und andererseits innenliegende Rasten (14) mit geneigt verlaufenden Abschnitten enthält, die die Schraubmutter (1) vorläufig in dem von dem Kragen (7) am weitesten entfernten Bodenabschnitt des Käfigs halten, nachdem die Schraubmutter in diesen eingesetzt wurde, wobei der Widerstand, der durch die Rasten den axialen Verschiebungen der Schraubmutter in dem Käfig entgegengesetzt wird, sehr viel niedriger ist als der Widerstand, den die äußeren Laschen einer Verschiebung des Käfigs in Bezug auf das Blech entgegensetzen.

ted for cooperating with an elongate hole (3) formed in the metal sheet (4) ; and a holding and guiding cage (5) adapted also to be mounted in this hole, which cage is formed by a moulded plastic material socket split longitudinally by windows (6) through which the wings of the nut pass jointingly, said socket being connected to an external collar (7) at one of its ends, and external bosses (8) integrally moulded with this socket being provided for cooperating with the longitudinal ends of the hole for angularly locking the socket after axial introduction thereof with the nut in this hole, then an angular displacement of 90° of the socket with nut thus introduced, characterized in that it comprises a flat metal cap (9), jointingly covering its external collar (7), perforated so as to let the bolts pass therethrough and having axially bent flanges (12) whose axial height is equal to or slightly less than the thickness of the collar, one at least of these flanges being bent to a little more than 90° so as to imprison the collar.

2. Fixing system according to claim 1, characterized in that the collar (7) is rectangular, in that the bent flanges (12) are four in number each extending along one side of the rectangle and in that two of these four flanges, opposite in twos, are bent to more than 90° so as to imprison the collar.

3. Fixing system according to any one of the claims 1 and 2, characterized in that the cage (5) comprises external lugs (13) with oblique ramps for bearing axially against the perforated metal sheet (4) at the end of positioning of the cage on this metal sheet and inner catches (14) with oblique ramps adapted for temporarily holding the nut (1) in the cage bottom the furthest away from the collar (7) after it has been positioned in this bottom, the resistance opposed by said catches to the axial movements of the nut in the cage being very much less than the resistance opposed by the external lugs to detachment of the cage with respect to the metal sheet.

## Claims

1. An anchor nut-cage fixing system to be applied or a metal sheet from one of the faces of this metal sheet with a view to receiving bolts presented from the same face, comprising : a nut (1) with wings (2) adap-

## FIG.1.

## FIG.2.

## FIG.3.

## FIG.4.